# EUROPEAN PATENT APPLICATION

(11) **EP 4 527 535 A1**
(43) Date of publication of application: **26.03.2025**
(21) Application number: 24201205.2
(22) Date of filing: 18.09.2024
(51) Int. Cl.: B23K 9/095, B23K 9/10

(54) **SYSTEMS AND METHODS TO MONITOR A WELDING ARC**

(30) Priority: 19.09.2023 US 202363583678 P; 10.09.2024 US 202418830076
(71) Applicant: Illinois Tool Works Inc., Glenview IL 60025 (US)
(72) Inventor: ROMENESKO, Charles James, Glenview, 60025 (US)
(74) Representative: HGF

(57) **Abstract**

Disclosed example welding power supplies include: power conversion circuitry configured to convert input power to welding power; and control circuitry configured to: control the power conversion circuitry based on a control loop and a reference parameter; add a carrier signal to the control loop, the carrier signal having a carrier frequency; measure an impedance at an output of the power conversion circuitry based on the carrier frequency; and control the reference parameter based on the impedance.

## Description

### FIELD OF THE DISCLOSURE

The present application claims the benefit of U.S. Patent Application Serial No. 63/583,678, filed September 19, 2023, entitled "SYSTEMS AND METHODS TO MONITOR A WELDING ARC." The entirety of U.S. Patent Application Serial No. 63/583,678 is expressly incorporated herein by reference.

### FIELD OF THE DISCLOSURE

This disclosure relates generally to welding systems and, more particularly, to systems and methods to monitor a welding arc.

### BACKGROUND

Conventional short circuit gas metal arc welding (GMAW), also referred to as metal inert gas (MIG) welding, is a welding process in which an electric arc forms between an electrode and pieces of metal that are to be welded. In some welding operations, specific waveforms are used to control the current and/or voltage to provide an improved welding result. Some such waveforms include rapid changes in voltage and/or current, and between arc states such as a short circuit and an arc state.

### SUMMARY

Systems and methods to monitor a welding arc are disclosed, substantially as illustrated by and described in connection with at least one of the figures, as set forth more completely in the claims.

### BRIEF DESCRIPTION OF THE DRAWINGS

FIG. 1 is an illustration of an example welding-type system in accordance with aspects of this disclosure.
FIG. 2 illustrates an example control system that may be used to control the welding-type system of FIG. 1.
FIG. 3A is a graph illustrating an example welding circuit resistance during operation of the welding-type system of FIG. 1.
FIG. 3B is a graph illustrating example voltage and current waveforms of a signal injected into the control system of FIG. 2.
FIG. 3C is a graph illustrating the current command and the resulting output current of the welding-type system including the injected signal.
FIG. 3D is a graph of the phase angle between the voltage and current of the injected signal.
FIG. 4 illustrates another example control system that may be used to control the welding-type system of FIG. 1.

The figures are not necessarily to scale. Where appropriate, similar or identical reference numbers are used to refer to similar or identical components.

### DETAILED DESCRIPTION

Some welding control schemes benefit from predicting the state of the welding arc and/or other aspects of the weld. For example, predicting the moment of reignition of the welding arc following a short circuit is beneficial for reducing spatter and/or weld puddle disturbances. However, the welding arc is highly dynamic, and can be difficult to accurately predict in time to proactively respond to the prediction.

Disclosed example systems and methods inject a carrier signal into the control system, and measures the current and voltage of the carrier signal to determine the impedance of the welding arc. Disclosed systems and methods respond to the impedance and/or changes in the impedance to predict the state of the arc. In some examples, an open-loop voltage signal is added to the voltage command in the current regulator of the control system. Alternatively, a current signal can be added to the current command input to the control system. Example systems and methods may then monitor a phase angle difference between the voltage and current of the carrier signal to determine the impedance, which is in turn used for controlling the welding process. Persistent excitation of the weld circuit with the carrier signal greatly improves the accuracy of the impedance measurement over time in disclosed example systems and methods.

As used herein, the term "welding-type power" refers to power suitable for welding, plasma cutting, induction heating, CAC-A and/or hot wire welding/preheating (including laser welding and laser cladding). As used herein, the term "welding-type power supply" refers to any device capable of, when power is applied thereto, supplying welding, plasma cutting, induction heating, CAC-A and/or hot wire welding/preheating (including laser welding and laser cladding) power, including but not limited to inverters, converters, resonant power supplies, quasi-resonant power supplies, and the like, as well as control circuitry and other ancillary circuitry associated therewith.

As used herein, a "weld voltage setpoint" refers to a voltage input to the power converter via a user interface, network communication, weld procedure specification, or other selection method.

As used herein, a "circuit" includes any analog and/or digital components, power and/or control elements, such as a microprocessor, digital signal processor (DSP), software, and the like, discrete and/or integrated components, or portions and/or combinations thereof.

Disclosed example welding power supplies include: power conversion circuitry configured to convert input power to welding power; and control circuitry configured to: control the power conversion circuitry based on a control loop and a reference parameter; add a carrier signal to the control loop, the carrier signal having a carrier frequency; measure an impedance at an output of the power conversion circuitry based on the carrier frequency; and control the reference parameter based on the impedance.

In some example welding power supplies, the control circuitry is configured to predict a transition from a first phase of a welding control waveform to a second phase of the welding control waveform based on the impedance. In some example welding power supplies, the control circuitry is configured to detect a clearing of a short circuit condition based on the impedance. In some example welding power supplies, the control circuitry is configured to reduce the reference parameter in response to detecting an indication of the clearing of the short circuit condition based on the impedance, wherein the reference parameter includes a current reference.

In some example welding power supplies, the control circuitry is configured to control the reference parameter based on a phase angle of the impedance. In some example welding power supplies, the control circuitry is configured to adjust the carrier frequency based on a phase angle of the impedance. In some example welding power supplies, the reference parameter is a current reference and the carrier signal is a voltage signal. In some example welding power supplies, the control circuitry is configured to implement a notch filter to mitigate the carrier signal within the control loop.

Some example welding power supplies further include a current sensor, the control circuitry configured to measure the impedance using the current sensor. Some example welding power supplies further include a voltage sensor configured to measure an output voltage of the power conversion circuitry, in which the control circuitry is configured to measure the impedance using the voltage sensor. In some example welding power supplies, the control circuitry is configured to estimate an output voltage of the power conversion circuitry based on the carrier signal and a DC link voltage. In some example welding power supplies, the reference parameter is a voltage reference and the carrier signal is a current signal.

Some other disclosed example welding power supplies include: power conversion circuitry configured to convert input power to welding power; and control circuitry configured to: control the power conversion circuitry based on a control loop and a reference parameter; add a carrier signal to the reference parameter, the carrier signal having a carrier frequency less than a control loop frequency; measure an impedance within the control loop based on the carrier frequency; and control the reference parameter based on the impedance.

In some example welding power supplies, the control circuitry is configured to predict a transition from a first phase of a welding control waveform to a second phase of the welding control waveform based on the impedance. In some example welding power supplies, the control circuitry is configured to detect a clearing of a short circuit condition based on the impedance. In some example welding power supplies, the control circuitry is configured to reduce the reference parameter in response to detecting an indication of the clearing of the short circuit condition based on the impedance, in which the reference parameter includes a current reference.

In some example welding power supplies, the control circuitry is configured to control the reference parameter based on a phase angle of the impedance. In some example welding power supplies, the control circuitry is configured to adjust the carrier frequency based on a phase angle of the impedance. In some example welding power supplies, the reference parameter is a current reference and the carrier signal is a current signal. Some example welding power supplies further include a current sensor, the control circuitry configured to measure the impedance using the current sensor.

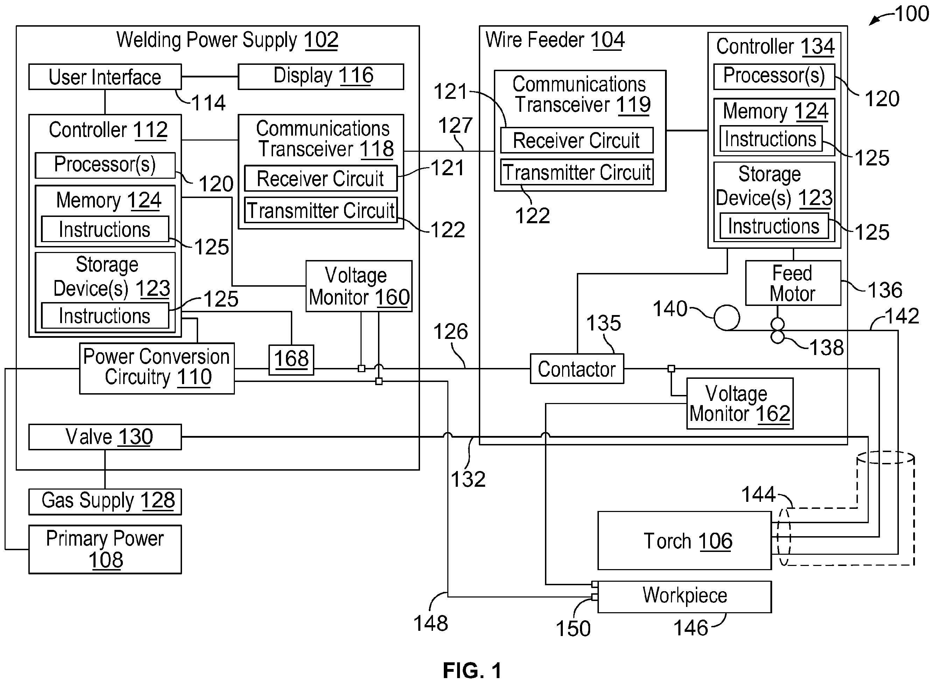

Turning now to the drawings, FIG. 1 is a block diagram of an example welding system 100 having a welding-type power supply 102, a wire feeder 104, and a welding torch 106. The welding system 100 powers, controls, and supplies consumables to a welding application. In some examples, the power supply 102 directly supplies input power to the welding torch 106. The welding torch 106 may be a torch configured for shielded metal arc welding (SMAW, or stick welding), tungsten inert gas (TIG) welding, gas metal arc welding (GMAW), flux cored arc welding (FCAW), based on the desired welding application. In the illustrated example, the power supply 102 is configured to supply power to the wire feeder 104, and the wire feeder 104 may be configured to route the input power to the welding torch 106. In addition to supplying an input power, the wire feeder 104 may supply a filler metal to a welding torch 106 for various welding applications (e.g., GMAW welding, flux core arc welding (FCAW)). While the example system 100 of FIG. 1 includes a wire feeder 104 (e.g., for GMAW or FCAW welding), the wire feeder 104 may be replaced by any other type of remote accessory device, such as a stick welding and/or TIG welding remote control interface that provides stick and/or TIG welding.

The power supply 102 receives primary power 108 (e.g., from the AC power grid, an engine/generator set, a battery, or other energy generating or storage devices, or a combination thereof), conditions the primary power, and provides an output power to one or more welding devices in accordance with demands of the system 100. The primary power 108 may be supplied from an offsite location (e.g., the primary power may originate from the power grid). The power supply 102 includes power conversion circuitry 110, which may include transformers, rectifiers, switches, and so forth, capable of converting the AC input power to AC and/or DC output power as dictated by the demands of the system 100 (e.g., particular welding processes and regimes). The power conversion circuitry 110 converts input power (e.g., the primary power 108) to welding-type power based on a weld voltage setpoint and outputs the welding-type power via a weld circuit.

In some examples, the power conversion circuitry 110 is configured to convert the primary power 108 to both welding-type power and auxiliary power outputs. However, in other examples, the power conversion circuitry 110 is adapted to convert primary power only to a weld power output.

The power supply 102 includes a controller 112 to control the operation of the power supply 102. The power supply 102 also includes a user interface 114. The controller 112, which is also referred to as "control circuitry," receives input from the user interface 114, through which a user may choose a process and/or input desired parameters (e.g., voltages, currents, particular pulsed or non-pulsed welding regimes, and so forth). The user interface 114 may receive inputs using any input device, such as via a keypad, keyboard, buttons, touch screen, voice activation system, wireless device, etc. Furthermore, the controller 112 controls operating parameters based on input by the user as well as based on other current operating parameters. Specifically, the user interface 114 may include a display 116 for presenting, showing, or indicating, information to an operator. The controller 112 may also include interface circuitry for communicating data to other devices in the system 100, such as the wire feeder 104. For example, in some situations, the power supply 102 wirelessly communicates with other welding devices within the welding system 100. Further, in some situations, the power supply 102 communicates with other welding devices using a wired connection, such as by using a network interface controller (NIC) to communicate data via a network (e.g., ETHERNET, 10baseT, 10base100, etc.). In the example of FIG. 1, the controller 112 communicates with the wire feeder 104 via the weld circuit via a communications transceiver 118, as described below.

The controller 112 includes at least one controller or processor 120 that controls the operations of the power supply 102. The controller 112 receives and processes multiple inputs associated with the performance and demands of the system 100. The processor 120 may include one or more microprocessors, such as one or more "general-purpose" microprocessors, one or more special-purpose microprocessors and/or ASICS, and/or any other type of processing device. For example, the processor 120 may include one or more digital signal processors (DSPs).

The example controller 112 includes one or more storage device(s) 123 and one or more memory device(s) 124. The storage device(s) 123 (e.g., nonvolatile storage) may include ROM, flash memory, a hard drive, and/or any other suitable optical, magnetic, and/or solid-state storage medium, and/or a combination thereof. The storage device 123 stores data (e.g., data corresponding to a welding application), instructions (e.g., software or firmware to perform welding processes), and/or any other appropriate data. Examples of stored data for a welding application include an attitude (e.g., orientation) of a welding torch, a distance between the contact tip and a workpiece, a voltage, a current, welding device settings, and so forth.

The memory device 124 may include a volatile memory, such as random access memory (RAM), and/or a nonvolatile memory, such as read-only memory (ROM). The memory device 124 and/or the storage device(s) 123 may store a variety of information and may be used for various purposes. For example, the memory device 124 and/or the storage device(s) 123 may store processor executable instructions 125 (e.g., firmware or software) for the processor 120 to execute. In addition, one or more control regimes for various welding processes, along with associated settings and parameters, may be stored in the storage device 123 and/or memory device 124, along with code configured to provide a specific output (e.g., initiate wire feed, enable gas flow, capture welding current data, detect short circuit parameters, determine amount of spatter) during operation.

In some examples, the welding power flows from the power conversion circuitry 110 through a weld cable 126 to the wire feeder 104 and the welding torch 106. The example weld cable 126 is attachable and detachable from weld studs at each of the power supply 102 and the wire feeder 104 (e.g., to enable ease of replacement of the weld cable 126 in case of wear or damage). Furthermore, in some examples, welding data is provided with the weld cable 126 such that welding power and weld data are provided and transmitted together over the weld cable 126. The communications transceiver 118 may be communicatively coupled to the weld cable 126 to communicate (e.g., send/receive) data over the weld cable 126. The communications transceiver 118 may be implemented based on various types of power line communications methods and techniques. For example, the communications transceiver 118 may utilize IEEE standard P1901.2 to provide data communications over the weld cable 126. In this manner, the weld cable 126 may be utilized to provide welding power from the power supply 102 to the wire feeder 104 and the welding torch 106. Additionally or alternatively, a communication cable 127 may be used to transmit and/or receive data communications between the communications transceiver 118 and a similar communications transceiver 119 of the wire feeder 104.

The example communications transceiver 118 includes a receiver circuit 121 and a transmitter circuit 122. Generally, the receiver circuit 121 receives data transmitted by the wire feeder 104 and the transmitter circuit 122 transmits data to the wire feeder 104. In some examples, the receiver circuit 121 receives communication(s) via the weld circuit while weld current is flowing through the weld circuit (e.g., during a welding-type operation) and/or after the weld current has stopped flowing through the weld circuit (e.g., after a welding-type operation).

Example implementations of the communications transceiver 118 are described in U.S. Patent No. 9,012,807. The entirety of U.S. Patent No. 9,012,807 is incorporated herein by reference. However, other implementations of the communications transceiver 118 may be used.

The example wire feeder 104 also includes a communications transceiver 119, which may be similar or identical in construction and/or function as the communications transceiver 118.

The example power supply 102 includes a voltage monitor 160 and a current monitor 168. The voltage monitor 160 monitors an output voltage from the welding-type power supply 102. The output voltage may be controlled by the power conversion circuitry 110, the touch detection circuitry 111, an external voltage source, current source, and/or load, and/or any other internal or external cause of voltage. The current monitor 168 monitors an output current. While the example current monitor 168 is illustrated monitoring the output current from the power conversion circuitry 110, the current monitor 168 may be configured to monitor any currents flowing through the output terminals of the power supply 102 and/or for any particular circuits. For example, the current monitor 168 may detect whether a current is flowing when the touch detection circuitry 111 is outputting a voltage and the power conversion circuitry 110 is disabled. The example wire feeder 104 may also include a voltage monitor 162 to monitor an arc voltage (e.g., between a location close to the arc and a location on the workpiece). The voltage monitor 162 may be coupled to a point on the torch 106, a point in the wire feeder 104, a point in the torch cable 144, or any other location in electrical contact with the weld circuit.

In some examples, a gas supply 128 provides shielding gases, such as argon, helium, carbon dioxide, and so forth, depending upon the welding application. The shielding gas flows to a valve 130, which controls the flow of gas, and if desired, may be selected to allow for modulating or regulating the amount of gas supplied to a welding application. The valve 130 may be opened, closed, or otherwise operated by the controller 112 to enable, inhibit, or control gas flow (e.g., shielding gas) through the valve 130. Shielding gas exits the valve 130 and flows through a cable 132 (which in some implementations may be packaged with the welding power output) to the wire feeder 104 which provides the shielding gas to the welding application. In some examples, the welding system 100 does not include the gas supply 128, the valve 130, and/or the cable 132.

In some examples, the wire feeder 104 uses the welding power to power the various components in the wire feeder 104, such as to power a wire feeder controller 134. As noted above, the weld cable 126 may be configured to provide or supply the welding power. The power supply 102 may also communicate with a communications transceiver 119 of the wire feeder 104 using the weld cable 126 and the communications transceiver 118 disposed within the power supply 102. In some examples, the communications transceiver 119 is substantially similar to the communications transceiver 118 of the power supply 102. The wire feeder controller 134 controls the operations of the wire feeder 104. In some examples, the wire feeder 104 uses the wire feeder controller 134 to detect whether the wire feeder 104 is in communication with the power supply 102 and to detect a current welding process of the power supply 102 if the wire feeder 104 is in communication with the power supply 102.

A contactor 135 (e.g., high amperage relay) is controlled by the wire feeder controller 134 and configured to enable or inhibit welding power to continue to flow to the weld cable 126 for the welding application. In some examples, the contactor 135 is an electromechanical device. However, the contactor 135 may be any other suitable device, such as a solid state device, and/or may be omitted when the power supply 102 is configured to control the output of welding-type power to the torch 106. The controller 112 and/or the controller 134 may control the contactor 135 to close and/or open to provide power to the torch 106. The wire feeder 104 includes a feed motor 136 that receives control signals from the wire feeder controller 134 to drive rollers 138 that rotate to pull wire off a spool 140 of wire and feed the wire to the torch 106. The wire is provided to the welding application through a torch cable 142. Likewise, the wire feeder 104 may provide the shielding gas from the cable 132 through the cable 142. The wire electrode, the shield gas, and the power from the weld cable 126 are bundled together in a single torch cable 144 and/or individually provided to the welding torch 106.

The welding torch 106 delivers the wire, welding power, and/or shielding gas for a welding application. The welding torch 106 is used to establish a welding arc between the welding torch 106 and a workpiece 146. A work cable 148 couples the workpiece 146 to the power supply 102 (e.g., to the power conversion circuitry 110) to provide a return path for the weld current (e.g., as part of the weld circuit). The example work cable 148 attachable and/or detachable from the power supply 102 for ease of replacement of the work cable 148. The work cable 148 may be terminated with a clamp 150 (or another power connecting device), which couples the power supply 102 to the workpiece 146.

In operation, the example controller 112 controls the power conversion circuitry 110 based on a control loop and one or more reference parameter(s) (e.g., a weld voltage setpoint, a wire feed speed setpoint). The control loop receives voltage feedback (e.g., from the voltage monitor 160, from the voltage monitor 162 via the communications transceiver 119) and/or current feedback (e.g., from the current monitor 168), and adjusts control values within the control loop based on the feedback. The controller 112 may use a predetermined waveform (e.g., a controlled short circuit, a Regulated Metal Deposition (RMD^{™}) waveform, a short arc waveform, etc.) in combination with the reference parameter(s) to control the output of the power conversion circuitry 110.

In some welding operations and/or waveforms, the welding operation benefits from accurate estimation and/or prediction of the arc state. To more accurately predict the arc state, the example controller 112 injects a carrier signal, having predetermined characteristics, into the control loop. The controller 112 further monitors the characteristics of the carrier signal at an output of the power conversion circuitry 110, at the location of the arc (e.g., at the torch 106), and/or at any other desired location, to measure a resistance of the arc. The controller 112 may then use the resistance of the arc and/or a rate of change in the resistance of the arc to predict the present and/or future state of the arc.

The controller 112 selects a frequency of the carrier signal based on characteristics of the welding circuit, such as resistance(s) and/or inductances of the weld cable 126, the torch cable 144, and/or the work cable 148. In some examples, the characteristics of the welding circuit may be estimated and/or based on current and/or prior measurements. In some examples, the controller 112 adjusts the frequency of the carrier signal during operation to obtain a phase angle within a desired range.

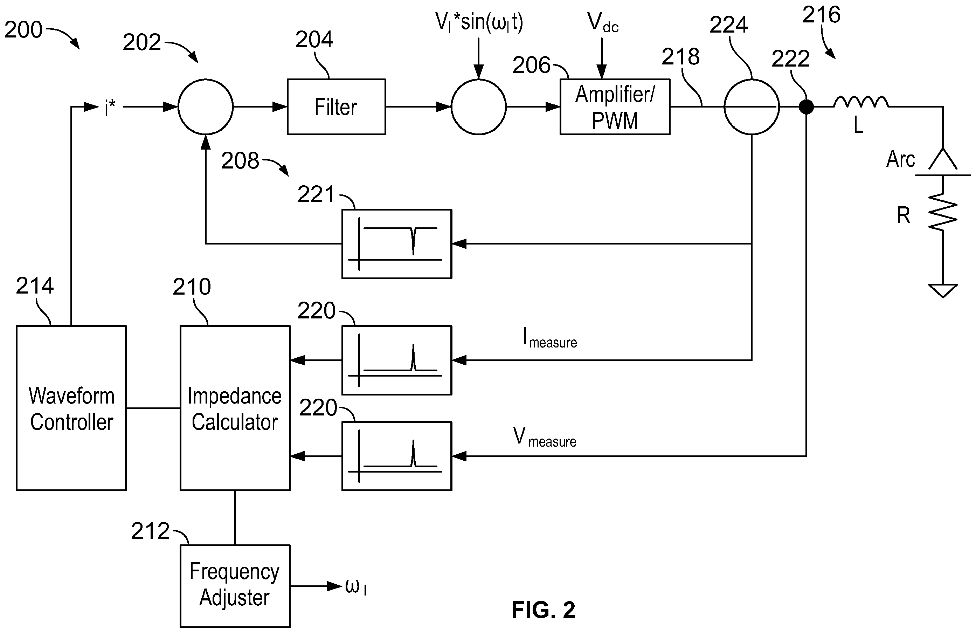

FIG. 2 illustrates an example control system 200 that may be used to control the welding-type system 100 of FIG. 1. The example control system 200 may be implemented by executing instructions (e.g., the instructions 125) via the processor 120 of the controller 112. However, in some examples, the carrier signal injection and measurement may be performed using the controller 134 in the wire feeder 104 (e.g., by execution of the instructions 125 by the processor(s) 120).

The control system 200 includes a closed control loop 202, having a filter 204 (e.g., a proportional-integral (PI) filter), an amplifier 206, and a feedback loop 208. The example controller 112 further includes an impedance calculator 210, a frequency adjuster 212, and a waveform controller 214. The filter 204, the impedance calculator 210, the frequency adjuster 212, and/or the waveform controller 214 may be implemented by the controller 112 using instructions executed on a processor, programmable circuitry programmed to perform the corresponding operations, application-specific circuitry, and/or any other programmable and/or non-programmable circuitry configurations.

The controller 112 inputs a current command i* to the closed control loop 202, from which current feedback is subtracted to provide a signal to the filter 204. The filter 204 generates a resultant voltage signal V_{ref} based on the current command i* and the current feedback.

The controller 112 injects a carrier voltage signal V_{I}*sin(ω_{I}t) into the filtered voltage signal V_{ref}. The carrier voltage signal has a predetermined voltage Vᵢ and a carrier frequency ωᵢ. The controller 112 selects the carrier frequency ωᵢ based on an estimated or measured time constant of the weld circuit 216 (e.g., L/R), and/or adjusts the carrier frequency ωᵢ via the frequency adjuster 212 as discussed below in more detail. The combined signal (V_{ref} + Vᵢ) controls the power conversion circuitry 110 (e.g., an amplifier or PWM circuit) in combination with a DC link voltage (V_{dc}) to output a welding output signal 218 (e.g., welding current and welding voltage) to the weld cable 126 and the work cable 148. The DC link voltage V_{dc} may be a bus voltage input to the power conversion circuitry 110. In some other examples, the controller 112 may input a voltage command, and/or the carrier signal is a current signal.

The measured voltage Vₘₑₐₛᵤᵣₑ and the measured current Iₘₑₐₛᵤᵣₑ of the welding output signal 218 are filtered via notch filters 220 to isolate the carrier frequency ωᵢ, and provided to the impedance calculator 210. The impedance calculator 210 determines an impedance of the welding circuit based on the voltage and current signals Vₘₑₐₛᵤᵣₑ, Iₘₑₐₛᵤᵣₑ. In some examples, the impedance calculator 210 determines a phase difference V∠I between the voltage and current of the welding output signal 218 at the carrier frequency ωᵢ to accurately determine the resistance of the weld circuit.

In the example of FIG. 2, the measured voltage Vₘₑₐₛᵤᵣₑ is measured using a voltage sensor 222 and the measured current Iₘₑₐₛᵤᵣₑ is measured using a current sensor 224. The current sensor 224 further provides the current feedback via the feedback loop 208.

The example frequency adjuster 212 selects the carrier frequency ωᵢ to be at the corner frequency of the weld circuit 216 (e.g., based on the L/R time constant), which increases the change in the phase angle as the resistance and/or inductance of the weld circuit 216 changes, and provides increased accuracy in measuring the phase difference V∠I. The frequency adjuster 212 may further monitor the phase difference V∠I to determine whether the carrier frequency ωᵢ is within a predetermined range of the corner frequency for the weld circuit 216, which corresponds to a phase difference V∠I of -45°. For example, if the phase difference V∠I increases above an upper threshold (e.g., -20°), the frequency adjuster 212 may increase the carrier frequency ωᵢ (e.g., incrementally, proportionally, etc.). Conversely, if the phase difference V∠I decreases below a lower threshold (e.g., -70°), the frequency adjuster 212 may decrease the carrier frequency ωᵢ (e.g., incrementally, proportionally, etc.). Alternatively, the example frequency adjuster 212 may adjust the carrier frequency ωᵢ using a control loop that generates a frequency error signal based on a difference between the phase difference V∠I and a target phase difference (e.g., -45°). The frequency error signal may be filtered (e.g., via a proportional-integral filter) to mitigate the effects of rapid changes in impedance on the carrier frequency ωᵢ.

The waveform controller 214 receives the phase difference V∠I and controls the commanded current i* based on a selected waveform and the phase difference V∠I. For example, if the waveform controller 214 determines that the phase difference V∠I has changed from increasing to decreasing, changed from decreasing to increasing, changed by more than a threshold amount, reached a threshold value, or met any other predetermined criteria, the waveform controller 214 may adjust the commanded current i* to implement the selected waveform. For example, the waveform controller 214 may reduce the commanded current i* in response to detecting an indication of the clearing of a short circuit condition in the weld circuit 216 based on the impedance.

The example control system 200 may include notch filters 221 to isolate the carrier voltage signal Vᵢ and/or reduce (e.g., prevent) filtering of the carrier voltage signal Vᵢ by the filter 204. In some examples, the frequency adjuster 212 controls the notch filters 220 and 221 based on adjustments to the carrier frequency ωᵢ.

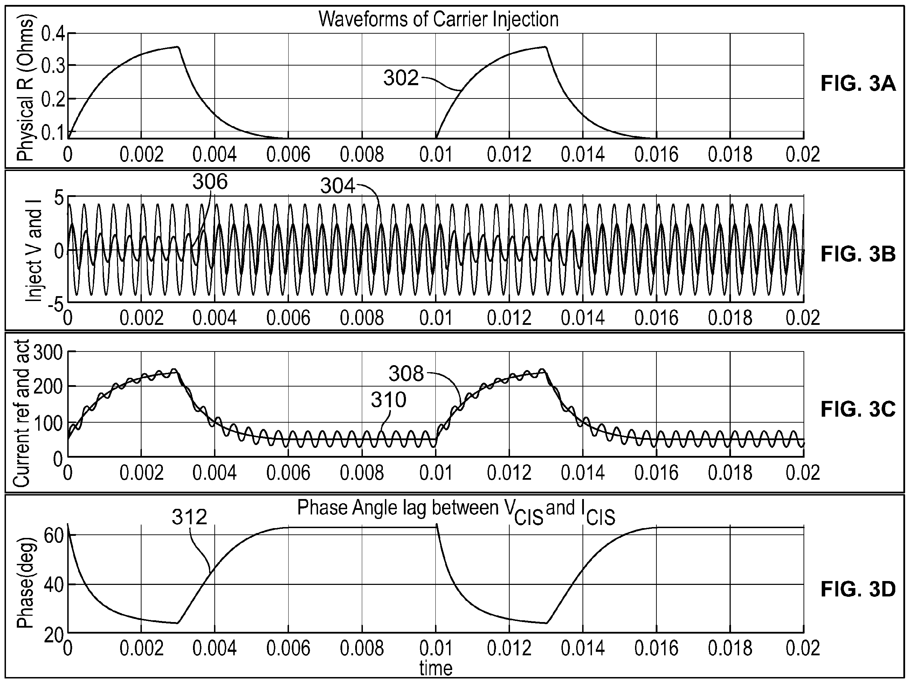

FIG. 3A is a graph illustrating an example welding circuit resistance 302 during operation of the welding-type system 100 of FIG. 1. The welding circuit resistance 302 may be based at least in part on the commanded current i* commanded by the waveform controller 214 of FIG. 2.

FIG. 3B is a graph illustrating an example voltage waveform 304 and a corresponding current waveform 306 of a signal Vᵢ injected into the control system 200 of FIG. 2. The voltage and current waveforms 304, 306 are modulated at the carrier frequency ωᵢ. As shown in FIG. 3B, the voltage waveform 304 has a consistent magnitude, while the magnitude of the current waveform 306 increases and decreases inversely with the resistance 302 of the weld circuit 216 shown in FIG. 3A.

FIG. 3C is a graph illustrating the current command 308 (e.g., the commanded current i* of FIG. 2) and the resulting output current 310 (e.g., the welding output signal 218) of the welding-type system 100 including the injected signal. As shown in FIG. 3C, the magnitude of the resulting output current 310 also changes based on the resistance 302 of the welding circuit 316. In some examples, the impedance calculator 210, the frequency adjuster 212, and the waveform controller 214 may use the current magnitude instead of the phase difference V∠I to control the control system 200.

FIG. 3D is a graph of the phase difference 312 between the voltage and current of the injected signal Vᵢ. As shown in FIGS. 3A and 3D, the phase difference 312 inversely correlates to the resistance 302 of the welding circuit 316. By monitoring the phase difference 312 via the impedance calculator 210, the waveform controller 214 can accurately estimate and/or predict the state of the welding arc.

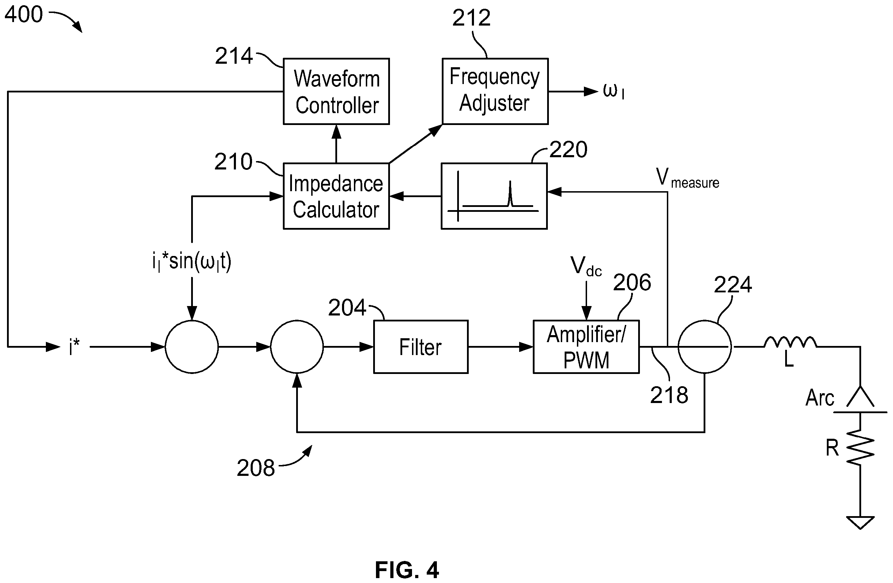

FIG. 4 illustrates another example control system 400 that may be used to control the welding-type system of FIG. 1. The example control system 400 is similar to the control system 200 of FIG. 2, and includes the filter 204, the amplifier 206, the feedback loop 208, the impedance calculator 210, the frequency adjuster 212, the waveform controller 214, and the weld circuit 216.

Instead of injecting a voltage signal Vᵢ, the example control system 400 injects a current signal Iᵢ at the carrier frequency ωᵢ into the current command signal i*. The current signal Ii is also provided to the impedance calculator 210. The impedance calculator 210 further receives a measured voltage in the control system 400, which is filtered via a notch filter 220 to isolate the carrier frequency ωᵢ. Based on the injected current signal Ii and the measured voltage signal Vₘₑₐₛᵤᵣₑ, the impedance calculator 210 determines the phase difference V∠I as discussed above.

The example control system 400 may be advantageously used relatively high inductances and low resistances in the weld circuit 216. In such cases, the carrier frequency ωᵢ will be a lower frequency than in the control system 200 of FIG. 2 (e.g., substantially below the current regulator bandwidth).

In some examples, instead of measuring the voltage signal Vₘₑₐₛᵤᵣₑ, the controller 112 may calculate the voltage resulting from the injected signal Vᵢ, Iᵢ based on the known injected signal Vᵢ, Iᵢ and the DC link voltage V_{dc}. For example, the controller 112 may determine an estimated voltage signal V̂ₘₑₐₛᵤᵣₑ by multiplying the known injected signal Vᵢ, Iᵢ and the magnitude of the DC link voltage V_{dc}. The impedance calculator 210 may then determine the phase difference V∠I using the measured current signal Iₘₑₐₛᵤᵣₑ and the estimated voltage signal V̂ₘₑₐₛᵤᵣₑ. Using the estimated voltage signal V̂ₘₑₐₛᵤᵣₑ reduces the filtering involved in obtaining the voltage signal and substantially retains the accuracy.

The present devices and/or methods may be realized in hardware, software, or a combination of hardware and software. The present methods and/or systems may be realized in a centralized fashion in at least one computing system, processors, and/or other logic circuits, or in a distributed fashion where different elements are spread across several interconnected computing systems, processors, and/or other logic circuits. Any kind of computing system or other apparatus adapted for carrying out the methods described herein is suited. A typical combination of hardware and software may be a processing system integrated into a welding power supply with a program or other code that, when being loaded and executed, controls the welding power supply such that it carries out the methods described herein. Another typical implementation may comprise an application specific integrated circuit or chip such as field programmable gate arrays (FPGAs), a programmable logic device (PLD) or complex programmable logic device (CPLD), and/or a system-on-a-chip (SoC). Some implementations may comprise a non-transitory machine-readable (e.g., computer readable) medium (e.g., FLASH memory, optical disk, magnetic storage disk, or the like) having stored thereon one or more lines of code executable by a machine, thereby causing the machine to perform processes as described herein. As used herein, the term "non-transitory machine readable medium" is defined to include all types of machine readable storage media and to exclude propagating signals.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. For example, block and/or components of disclosed examples may be combined, divided, re-arranged, and/or otherwise modified. Therefore, the present method and/or system are not limited to the particular implementations disclosed. Instead, the present method and/or system will include all implementations falling within the scope of the appended claims, both literally and under the doctrine of equivalents.

Various aspects of the present disclosure are provided in the following numbered clauses:
Clause 1. A welding power supply, comprising:
   power conversion circuitry configured to convert input power to welding power; and
   control circuitry configured to:
      control the power conversion circuitry based on a control loop and a reference parameter;
      add a carrier signal to the control loop, the carrier signal having a carrier frequency;
      measure an impedance at an output of the power conversion circuitry based on the carrier frequency; and
      control the reference parameter based on the impedance.
Clause 2. The welding power supply as defined in clause 1, wherein the control circuitry is configured to predict a transition from a first phase of a welding control waveform to a second phase of the welding control waveform based on the impedance.
Clause 3. The welding power supply as defined in clause1, wherein the control circuitry is configured to detect a clearing of a short circuit condition based on the impedance.
Clause 4. The welding power supply as defined in clause 3, wherein the control circuitry is configured to reduce the reference parameter in response to detecting an indication of the clearing of the short circuit condition based on the impedance, wherein the reference parameter comprises a current reference.
Clause 5. The welding power supply as defined in clause 1, wherein the control circuitry is configured to control the reference parameter based on a phase angle of the impedance.
Clause 6. The welding power supply as defined in clause 1, wherein the control circuitry is configured to adjust the carrier frequency based on a phase angle of the impedance.
Clause 7. The welding power supply as defined in clause1, wherein the reference parameter is a current reference and the carrier signal is a voltage signal.
Clause 8. The welding power supply as defined in clause 1, wherein the control circuitry is configured to implement a notch filter to mitigate the carrier signal within the control loop.
Clause 9. The welding power supply as defined in clause 1, further comprising a current sensor, the control circuitry configured to measure the impedance using the current sensor.
Clause 10. The welding power supply as defined in clause 9, further comprising a voltage sensor configured to measure an output voltage of the power conversion circuitry, the control circuitry configured to measure the impedance using the voltage sensor.
Clause 11. The welding power supply as defined in clause 9, wherein the control circuitry is configured to estimate an output voltage of the power conversion circuitry based on the carrier signal and a DC link voltage.
Clause 12. The welding power supply as defined in clause 1, wherein the reference parameter is a voltage reference and the carrier signal is a current signal.
Clause 13. A welding power supply, comprising:
   power conversion circuitry configured to convert input power to welding power; and
   control circuitry configured to:
      control the power conversion circuitry based on a control loop and a reference parameter;
      add a carrier signal to the reference parameter, the carrier signal having a carrier frequency less than a control loop frequency;
      measure an impedance within the control loop based on the carrier frequency; and
      control the reference parameter based on the impedance.
Clause 14. The welding power supply as defined in clause 13, wherein the control circuitry is configured to predict a transition from a first phase of a welding control waveform to a second phase of the welding control waveform based on the impedance.
Clause 15. The welding power supply as defined in clause 13, wherein the control circuitry is configured to detect a clearing of a short circuit condition based on the impedance.
Clause 16. The welding power supply as defined in clause15, wherein the control circuitry is configured to reduce the reference parameter in response to detecting an indication of the clearing of the short circuit condition based on the impedance, wherein the reference parameter comprises a current reference.
Clause 17. The welding power supply as defined in clause 13, wherein the control circuitry is configured to control the reference parameter based on a phase angle of the impedance.
Clause 18. The welding power supply as defined in clause 13, wherein the control circuitry is configured to adjust the carrier frequency based on a phase angle of the impedance.
Clause 19. The welding power supply as defined in clause 13, wherein the reference parameter is a current reference and the carrier signal is a current signal.
Clause 20. The welding power supply as defined in clause 13, further comprising a current sensor, the control circuitry configured to measure the impedance using the current sensor.

## Claims

1. A welding power supply, comprising:
power conversion circuitry configured to convert input power to welding power; and
control circuitry configured to:
control the power conversion circuitry based on a control loop and a reference parameter;
add a carrier signal to the control loop, the carrier signal having a carrier frequency;
measure an impedance at an output of the power conversion circuitry based on the carrier frequency; and
control the reference parameter based on the impedance.

2. The welding power supply as defined in claim 1, wherein the control circuitry is configured to predict a transition from a first phase of a welding control waveform to a second phase of the welding control waveform based on the impedance.

3. The welding power supply as defined in claim 1, wherein the control circuitry is configured to detect a clearing of a short circuit condition based on the impedance,
optionally wherein the control circuitry is configured to reduce the reference parameter in response to detecting an indication of the clearing of the short circuit condition based on the impedance, wherein the reference parameter comprises a current reference.

4. The welding power supply as defined in claim 1, wherein the control circuitry is configured to control the reference parameter based on a phase angle of the impedance.

5. The welding power supply as defined in claim 1, wherein the control circuitry is configured to adjust the carrier frequency based on a phase angle of the impedance.

6. The welding power supply as defined in claim 1, wherein the reference parameter is a current reference and the carrier signal is a voltage signal.

7. The welding power supply as defined in claim 1, wherein the control circuitry is configured to implement a notch filter to mitigate the carrier signal within the control loop.

8. The welding power supply as defined in claim 1, further comprising a current sensor, the control circuitry configured to measure the impedance using the current sensor,
optionally wherein the welding power supply further comprises a voltage sensor configured to measure an output voltage of the power conversion circuitry, the control circuitry configured to measure the impedance using the voltage sensor, or
optionally wherein the control circuitry is configured to estimate an output voltage of the power conversion circuitry based on the carrier signal and a DC link voltage.

9. The welding power supply as defined in claim 1, wherein the reference parameter is a voltage reference and the carrier signal is a current signal.

10. A welding power supply, comprising:
power conversion circuitry configured to convert input power to welding power; and
control circuitry configured to:
control the power conversion circuitry based on a control loop and a reference parameter;
add a carrier signal to the reference parameter, the carrier signal having a carrier frequency less than a control loop frequency;
measure an impedance within the control loop based on the carrier frequency; and
control the reference parameter based on the impedance.

11. The welding power supply as defined in claim 10, wherein the control circuitry is configured to predict a transition from a first phase of a welding control waveform to a second phase of the welding control waveform based on the impedance.

12. The welding power supply as defined in claim 10, wherein the control circuitry is configured to detect a clearing of a short circuit condition based on the impedance,
optionally wherein the control circuitry is configured to reduce the reference parameter in response to detecting an indication of the clearing of the short circuit condition based on the impedance, wherein the reference parameter comprises a current reference.

13. The welding power supply as defined in claim 10, wherein the control circuitry is configured to control the reference parameter based on a phase angle of the impedance.

14. The welding power supply as defined in claim 10, wherein the control circuitry is configured to adjust the carrier frequency based on a phase angle of the impedance.

15. The welding power supply as defined in claim 10, wherein the reference parameter is a current reference and the carrier signal is a current signal, or
wherein the welding power supply further comprises a current sensor, the control circuitry configured to measure the impedance using the current sensor.
